# FASCICULE DE BREVET EUROPEEN

(11) **EP 2 165 169 B1**
(45) Date de publication et mention de la délivrance du brevet: **03.06.2020**
(21) Numéro de dépôt: 08773835.7
(22) Date de dépôt: 03.07.2008
(51) Int. Cl.: G01J 3/06

(54) **DISPOSITIF D'IMAGERIE MULTISPECTRAL À FILTRE DE TYPE MOEMS POUR OBSERVATION SATELLITAIRE**
MULTISPEKTRALE ABBILDUNGSVORRICHTUNG MIT MOEMS-FILTER ZUR SATELLITENBEOBACHTUNG
MULTISPECTRAL IMAGING DEVICE WITH MOEMS TYPE FILTER FOR SATELLITE OBSERVATION

(30) Priorité: 06.07.2007 FR 0704907
(43) Date de publication de la demande: 24.03.2010
(73) Titulaire: THALES, 92400 Courbevoie (FR)
(72) Inventeur: VIARD, Thierry, F-06210 Mandelieu (FR); ZAMKOTSIAN, Frédéric, F-13006 Paris (FR)
(74) Mandataire: Esselin, Sophie
(86) Numéro de dépôt international: PCT/EP2008/005424
(87) Numéro de publication internationale: WO 2009/007054

(56) Documents cités:
- EP-A- 0 548 830
- US-A1- 2005 024 640
- SHIELDS E A; WEI LIU; TALGHADER J J; LEGER J R: "Imaging microspectrometer with space-variant adaptive dispersion incorporating a MEMS mirror array" PROCEEDINGS OF THE SPIE, vol. 5177, no. 1, 6 août 2003 (2003-08-06), pages 48-59, XP007903852

## Description

L'invention se rapporte à un dispositif d'observation multi-spectral utilisé notamment pour l'acquisition d'images d'observation satellitaire de la terre par balayage dit « Pousse-balai » (Push-broom selon la terminologie anglo-saxonne) à partir de barrettes de détecteurs de type par exemple à transfert de charge (CCD) défilant en regard de la zone observée. Le document US2005/024640 A1 divulgue un spectromètre de type "pousse-balai".

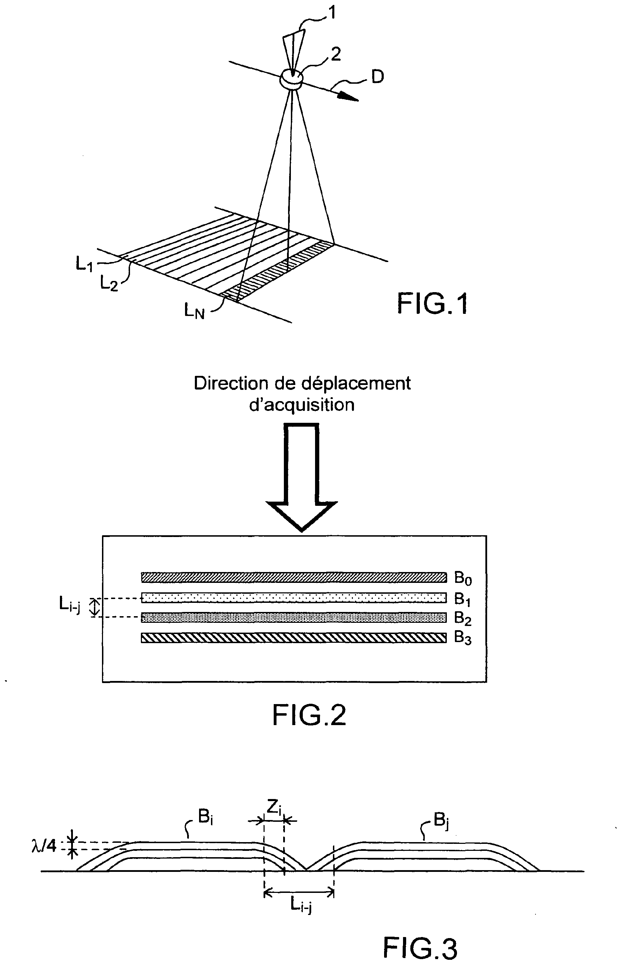

Le principe Push-broom est illustré en figure 1 de manière schématique dans le cas d'une barrette de détecteurs 1. Cette barrette embarquée à bord du satellite réalise l'observation successive au cours du défilement du satellite de lignes L₁, L₂, ..., L_{N} perpendiculaires à la direction de déplacement D. Une optique 2 à grand champ forme l'image du sol sur une ligne, de détecteurs situés dans le plan focal. Le balayage ligne est obtenu par la lecture des éléments sensibles de la ligne de détection Le balayage du paysage dans la direction perpendiculaire résulte du défilement du satellite sur son orbite. Il est par ailleurs possible d'utiliser un séparateur spectral permettant de plus de faire cette observation dans différentes fenêtres spectrales et ainsi réaliser de l'imagerie multispectrale.

De manière connue lorsque l'on souhaite réaliser une image polychromatique on utilise des barrettes de détecteurs élémentaires couplées à des filtres interférentiels comme illustré en figure 2 qui représentent l'exemple de quatre filtres présentant des bandes spectrales respectivement B₀, B₁, B₂, B₃ séparées physiquement d'une distance L ᵢ₋ⱼ. Notamment il est connu d'utiliser des filtres de faible épaisseurs appelés filtres « allumettes ». Pour reconstituer les différentes composantes spectrales on peut utiliser classiquement un détecteur couplé à quatre filtres de très faibles épaisseurs. Ces filtres sont délicats à fabriquer car constitués d'empilements de couches minces à la surface d'un substrat. La figure 3 montre un exemple d'empilement de couches, typiquement une vingtaine de couches réparties sur les deux faces d'un substrat peuvent être nécessaires pour constituer un filtre dans une gamme de longueurs d'onde données. Ce type de filtre présente notamment deux types d'inconvénients. Le premier est lié aux effets de bord dans une zone zᵢ qui apparaissent dus à l'empilement de l'ensemble de ces couches d'épaisseur de l'ordre de λ/4 et qui pour un nombre important de couches fragilise les filtres. Le second inconvénient est lié à ce que les différents filtres sont réalisés de manière connexe sur un même substrat comme illustré en figure 3 qui schématise la réalisation de deux types d'empilement permettant d'assurer des fonctions de filtrage dans des bandes de longueurs d'onde Bᵢ et Bⱼ. Les technologies d'empilement de couches nécessitent d'imposer des distances minimales de séparation entre deux filtres, de l'ordre de quelques millimètres, ce qui revient à effectuer des images de scènes au sol distantes de plusieurs kilomètres.

Pour notamment résoudre ce problème de distance trop élevée, la présente invention propose un dispositif d'imagerie multispectral comportant une structure unique commandable électriquement de manière à réaliser une fonction de filtrage dans une bande de longueurs d'onde choisie, n'utilisant ainsi plus les empilements classiques de couches. L'intérêt de l'invention réside de plus dans la possibilité de faire varier en longueur d'onde et en largeur spectrale, la fonction de filtrage spectral.

Plus précisément l'invention a pour objet un Dispositif d'imagerie multispectral d'observation satellitaire selon la revendication 1.

Selon une variante de l'invention, le premier élément dispersif est un réseau.

Selon une variante de l'invention, le premier élément dispersif est un prisme, ou un réseau, ou un composant incorporant les fonctions de réseau et de prisme.

Selon une variante de l'invention, les moyens de commande du système micro-opto-électronique comportent des moyens pour faire varier la fonction de filtrage avec la même période que le temps d'acquisition d'une image correspondant au temps de déplacement équivalent à une ligne de détecteurs défilant en regard de la zone observée.

Selon une variante de l'invention, le second élément dispersif est un réseau, ou un réseau, ou un composant incorporant les fonctions de réseau et de prisme.

Selon une variante de l'invention, le premier et le second éléments dispersifs sont un seul et même composant.

Selon une variante de l'invention, le composant micro-opto-électronique comporte une structure de micro-miroirs suspendus par rapport à un substrat dont la distance ou l'angle avec ledit substrat peut être commandée électriquement.

Selon une variante de l'invention, la structure de micro-miroirs comportent des éléments unitaires présentant des longueurs de quelques dizaines de microns et des largeurs de quelques microns.

Selon une variante de l'invention, les éléments unitaires sont séparés d'un pas de quelques microns.

Selon une variante de l'invention, les moyens de commande sont programmables depuis le sol.

L'invention sera mieux comprise et d'autres avantages apparaîtront à la lecture de la description qui va suivre donnée à titre non limitatif et grâce aux figures annexées parmi lesquelles :
- la figure 1 schématise un exemple de dispositif selon l'invention ;
- la figure 2 illustre un exemple de dispositif d'imagerie multispectrale selon l'art connu utilisant un filtre de type « allumette » ;
- la figure 3 illustre une vue détaillée de l'ensemble des couches nécessaires à la réalisation de filtre de type « allumette » ;
- la figure 4 illustre un premier exemple de dispositif d'imagerie selon l'invention ;
- la figure 5 illustre un second exemple de dispositif d'imagerie selon l'invention dans lequel les combinaisons optiques sont mises en relief ;
- la figure 6 illustre un troisième exemple de dispositif d'imagerie selon l'invention dans lequel les combinaisons optiques sont mises en relief ;
- la figure 7 illustre plus en détails le comportement du filtre à base de MOEMS utilisé dans le dispositif de l'invention ;
- les figures 8a et 8b illustrent des vues en perspective et en coupe de composant MOEMS sans tension appliquée ;
- les figures 9a et 9b illustrent des vues en perspective et en coupe de composant MOEMS avec tension appliquée ;
- les figures 10a et 10b illustrent l'adressage des fonctions de filtrage couplées au déplacement des barrettes de détecteurs dans un dispositif de l'invention.

De manière générale, le dispositif de l'invention comporte des moyens de filtrage en longueur d'onde pour réaliser différents faisceaux colorés de manière à faire de l'imagerie multispectrale comportant un composant du type MOEMS (de terminologie anglo-saxonne : Micro-Opto-Electro-Mechanical Systems), offrant simultanément des fonctions mécaniques, électriques et optiques. Ce type de composant judicieusement associé à un élément dispersif dans un dispositif d'imagerie multi-spectral permet de réaliser plusieurs fonctions de filtrage dans des bandes de longueurs d'onde différentes grâce à une commande électrique. L'ajustement spectral peut être ultra rapide grâce à la grande rapidité des MOEMS comme cela sera explicité ci-après.

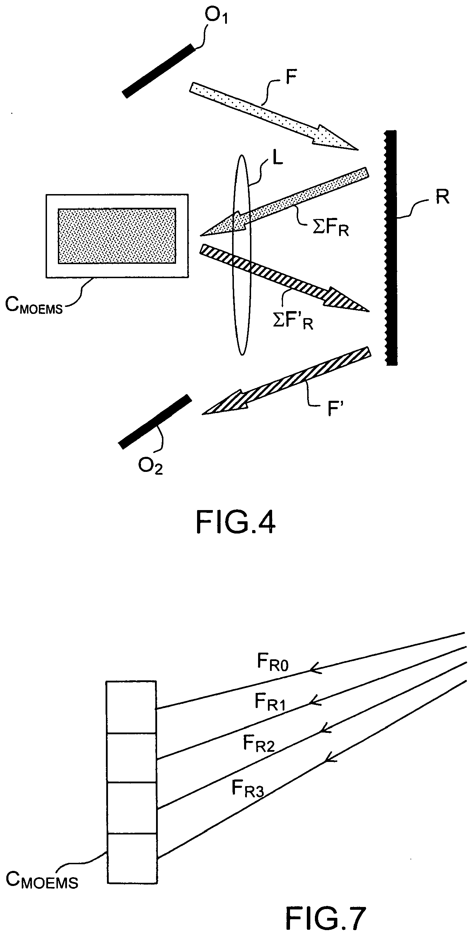

Selon un premier exemple de réalisation de l'invention, le dispositif peut comprendre un seul réseau de diffraction sur le chemin incident au niveau du composant MOEMS et du chemin réfléchi. Ainsi selon un exemple de ce type de configuration, illustrée en figure 4, le dispositif comprend une optique grand champ 0₁ dirigeant un faisceau F de lumière polychromatique émettant dans une large bande spectrale. Le dispositif comporte en outre un réseau diffractant R permettant de diffracter un faisceau ΣF_{R} composé de faisceaux unitaires F_{Ri} en dispersant dans différentes directions au travers d'une lentille L, lesdits faisceaux unitaires comportant les longueurs d'onde appartenant à la bande spectrale. Ces différents faisceaux sont envoyés sur différentes portions du composant C_{MOEMS} qui assure une fonction de filtrage commandable en longueur d'onde, en réfléchissant uniquement certaines longueurs d'onde dans un faisceau ∑F_{R}' au travers de la lentille L en direction du même réseau R. On recombine ainsi l'ensemble des longueurs d'onde après filtrage dans un faisceau F' qui via une optique 0₂ est envoyé en direction de la zone à observer (non représentée).

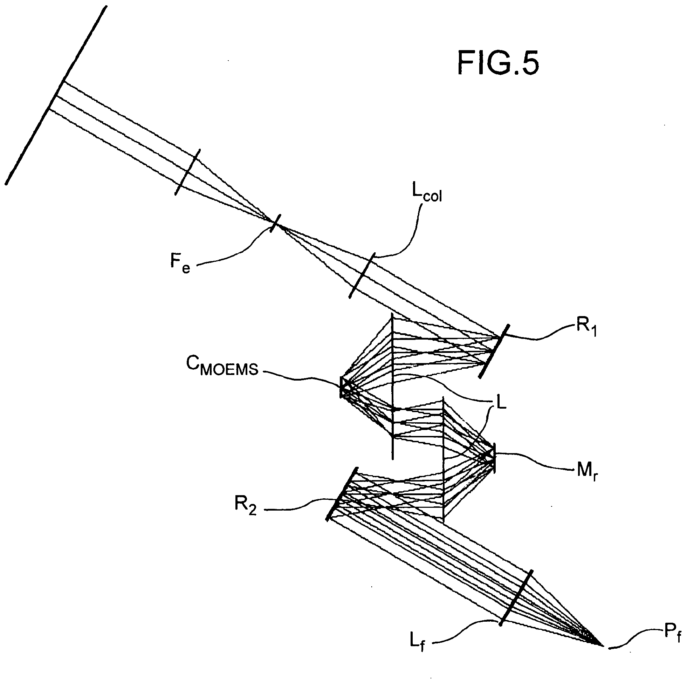

La figure 5 illustre plus en détails un second exemple de dispositif selon l'invention dans lequel deux réseaux R₁ et R₂ sont utilisés. Plus précisément, un faisceau de lumière incident est envoyé au travers d'une fente Fₑ en direction d'une lentille de collimation L_{col} et d'un premier réseau de diffraction R₁. Ce dernier diffracte en différentes directions un faisceau ∑F_{R} sur le composant C_{MOEMS} au travers de lentilles L, puis est à nouveau envoyé en directions, via un miroir Mr sur un second réseau de diffraction R₂. Le faisceau ∑F_{R}' est alors refocalisé grâce à une lentille de focalisation L_{f} en direction du plan focal P_{f} des lignes de détection.

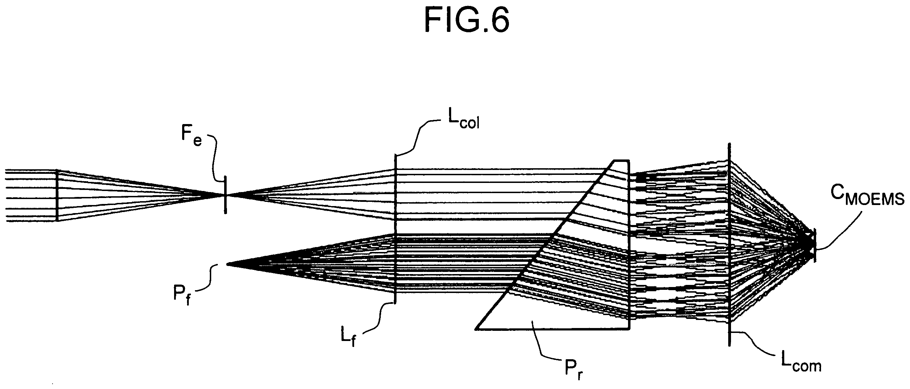

La figure 6 illustre un troisième exemple de dispositif selon l'invention dans lequel, l'élément dispersant est un prisme Pᵣ. Selon cet exemple, le faisceau ∑F_{R} est envoyé en direction du composant C_{MOEMS} au travers d'une lentille de collimation L_{col} en direction du prisme qui le disperse en un faisceau ∑F_{R}' envoyé sur une lentille de focalisation L_{f} en direction du plan focal P_{f}, des lignes de détection.

Le schéma de la figure 7 illustre plus en détails, les faisceaux diffractés, ici quatre représentés F_{R0}, F_{R1}, F_{R2} et F_{R3} envoyés en direction de différents secteurs de composants commandables localement de manière à pouvoir localement réfléchir ou non une longueur d'onde déterminée.

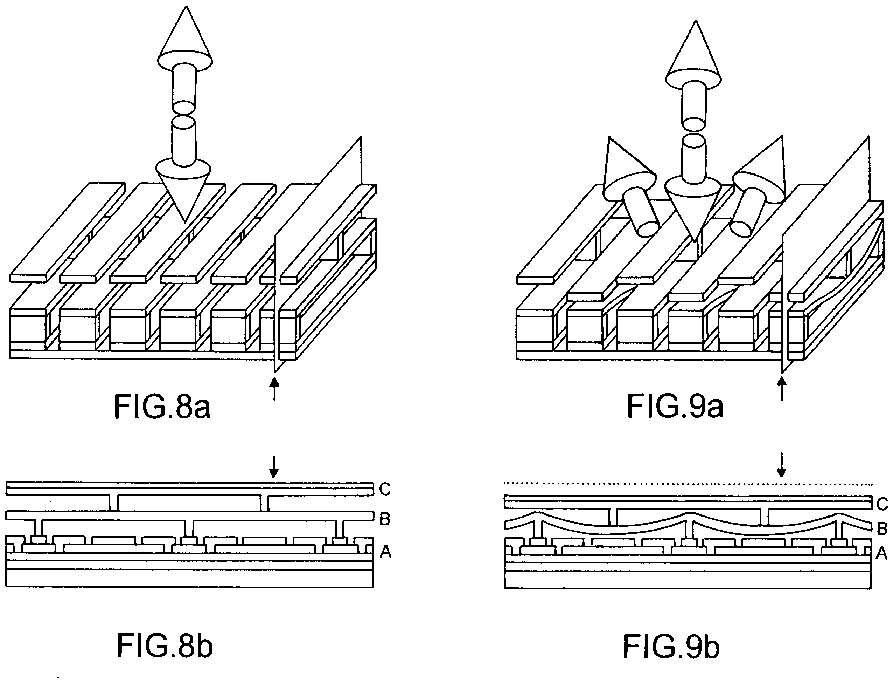

Nous allons décrire ci-après plus en détails le comportement de ce type de composant. Il s'agit de microstructure pouvant assurer une fonction de miroir vis à vis d'un faisceau de lumière multispectral comme illustré en figure 8a. La figure 8b est relative à une vue en coupe de la structure représentée en figure 8a. Sous l'effet d'un champ électrique appliqué et par force électrostatique, certains éléments unitaires Mₒᵢ peuvent être rapprochés du substrat créant par la même une structure réseau comme illustré en figure 9a et 9b. Typiquement les éléments Mₒᵢ peuvent présenter des longueurs d'environ quelques dizaines de microns pour des largeurs d'environ quelques microns. On réalise ainsi des réseaux de micro-miroirs capables de réfléchir ou non le faisceau lumineux Fᵢ et pilotables électriquement.

Selon l'invention, lorsque des faisceaux F_{R0}, F_{R1}, F_{R2}, F_{R3}, respectivement centrés sur les longueurs d'onde λ₀, λ₁, λ₂, λ₃ avec des largeurs de bande spectrale Δλ₀, Δλ₁, Δλ₂, Δλ₃ arrivent sur un composant C_{MOEMS}, comme illustré en figure 7, certaines longueurs d'onde peuvent être éteintes ou dispersées de manière à restituer en réflexion dans une direction donnée des faisceaux présentant des bandes spectrales partiellement filtrées par rapport aux faisceaux F_{R0}, F_{R1}, F_{R2}, F_{R3}. En réacheminant ces faisceaux partiellement filtrés en direction du réseau R, on recombine ces différents faisceaux en vertu du principe inverse de la lumière.

Ainsi plus précisément on peut successivement piloter le composant MOEMS de manière à ce qu'il réfléchisse par exemple successivement :
- les faisceaux F'_{R1}, F'_{R2}, F'_{R3} correspondant à une bande d'émission dite B₀ ;
- les faisceaux F'_{R0}, F'_{R2}, F'_{R3} correspondant à une bande d'émission dite B₁ ;
- les faisceaux F'_{R0}, F'_{R1}, F'_{R3} correspondant à une bande d'émission dite B₂ ;
- les faisceaux F'_{R0}, F'_{R1}, F'_{R2} correspondant à une bande d'émission dite B₃.

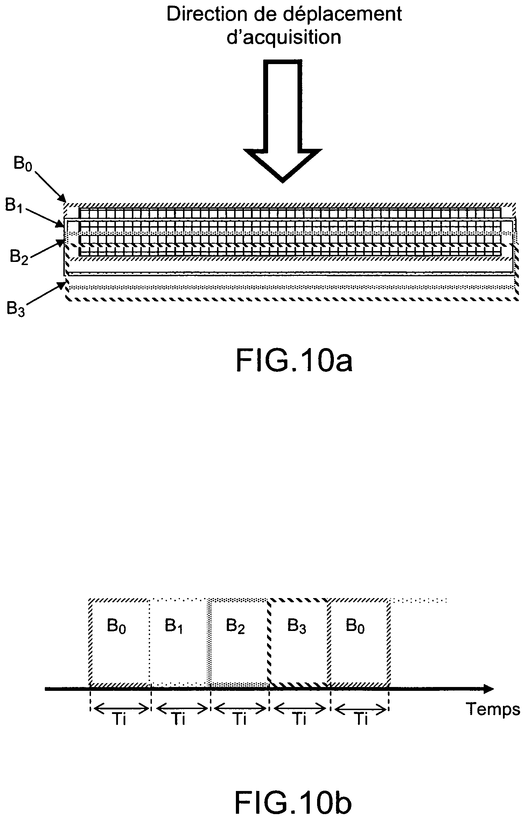

Le temps d'intégration par une ligne de barrettes de détecteurs étant Tᵢₙ, avantageusement et selon l'invention les fonctions de filtrage sont permutées de manière concomitante également tous les Tᵢₙ de manière à ce qu'un ensemble de quatre barrettes de diodes puissent intégrer l'ensemble de quatre images « colorées ». En effet comme illustré en figure 8a, dans un premier temps les quatre barrettes de détecteurs D₀, D₁, D₂, D₃ intègrent des images filtrées avec la bande B₀, puis lorsque le satellite a défilé d'une unité équivalente à une distance égale au pas d'une barrette de détecteur (typiquement ce pas peut être de l'ordre d'une dizaine de microns correspondant à une distance au sol de quelques dizaines de mètres à comparer aux quelques kilomètres en observation obtenus avec les filtres de l'art antérieur), les quatre barrettes intègrent des images filtrées avec la bande B₁, et ainsi de suite de manière à ce qu'au bout d'un temps égal, à 4Tᵢₙ comme schématisé en figure 10b, chacune des barrettes ait intégré l'ensemble des quatre images colorées avec les quatre fonctions de filtrage. Il est ainsi possible de commander typiquement au bout d'un temps Tᵢₙ de l'ordre de la microseconde, le changement de filtre nécessaire à l'acquisition d'une image couleur. L'invention ici décrite consiste (par exemple dans le cas de 4 bandes spectrales) à utiliser un détecteur matriciel avec 4 lignes de détecteurs. Néanmoins, de manière générale on peut avantageusement caler le nombre de lignes de détecteurs et le nombre de bandes spectrales en disposant N lignes pour N bandes spectrales.

Ainsi, selon l'invention on fait varier la fonction spectrale (bande spectrale) de façon cyclique (B0 -> B1 -> B2 -> B3 -> B0 ...) avec la même période que le temps d'intégration (déplacement équivalent à une ligne). Une scène peut être alors observée successivement dans les 4 bandes spectrales. Les avantages de cette solution résident dans l'absence de filtres allumettes et la possibilité d'augmenter le nombre de bande facilement. Le profil spectral peut également être facilement programmable depuis le sol.

## Revendications

1. Dispositif d'imagerie multispectrale d'observation satellitaire fonctionnant dans N bandes de longueurs d'onde, respectivement centrée sur une première longueur d'onde (λ₁),..., une énième longueur d'onde (λ_{N}), comportant :
- une source émettant un faisceau lumineux dans un ensemble des N bandes de longueurs d'onde ;
- une optique grand champ ;
- un ensemble de N lignes de détecteurs , embarqué à bord d'un satellite pour réaliser l'observation successive d'une zone observée au cours du défilement du satellite de lignes (L₁, L₂, ..., L_{N}) perpendiculaires à la direction de déplacement D dudit satellite et fonctionnant dans les N bandes de longueurs d'onde, et permettant de faire l'acquisition d'images de ladite zone observée dans différentes bandes d'émission (B₀, B₁, B₂, B₃) ;
- des moyens de filtrage optique,
**caractérisé en ce qu'**il comporte en outre :
- un premier élément de dispersion (R₁,R) permettant de disperser le faisceau de lumière en un faisceau ΣF_{R} composé de faisceaux unitaires F_{Ri} en direction des moyens de filtrage ;
- les moyens de filtrage optiques étant des moyens de filtrage spectral et comprenant au moins un système micro-opto-électronique (MOEMS) sur lequel arrivent les faisceaux F_{Ri,} , le système micro-opto-électronique comprenant une structure de micro-miroirs élémentaires (Mₒᵢ) suspendus par rapport à un substrat et dont la distance ou l'angle avec ledit substrat est commandable électriquement, de manière à constituer, par rapprochement de certains micro-élémentaires dudit substrat, un réseau en réflexion capable de réaliser N fonctions de filtrage pour les N bandes spectrales, accordable en longueur d'onde et diffractant uniquement certaines longueurs d'onde, tandis que d'autres sont éteintes,
un faisceau ∑F_{R}' réfléchit par ledit système micro-opto-électronique présentant des bandes spectrales partiellement filtrées par rapport aux faisceaux F_{Ri};
- des moyens de commande dudit système micro-opto-électronique permettant de sélectionner dans le temps, la fonction de filtrage spatial
- un second élément de dispersion (R₂, R) permettant de recombiner tous les faisceaux filtrés correspondant à une bande d'émission donnée (B₀, B₁, B₂, B₃) en sortie des moyens de filtrage selon une direction donnée, et de les envoyer successivement dans le temps en direction de la zone à observer.

2. Dispositif d'imagerie d'observation satellitaire selon la revendication 1, **caractérisé en ce que** le premier élément de dispersion est un réseau ou un prisme, ou un réseau, ou un composant incorporant les fonctions de réseau et de prisme.

3. Dispositif d'imagerie d'observation satellitaire selon l'une des revendications 1 ou 2, **caractérisé en ce que** les moyens de commande du système micro opto-électronique comportent des moyens pour faire varier la fonction de filtrage avec la même période que le temps d'acquisition d'une image correspondant au temps de déplacement équivalent à une ligne de détecteurs défilant en regard de la zone observée.

4. Dispositif d'imagerie d'observation satellitaire selon l'une des revendications 1 à 3, **caractérisé en ce que** le second élément est un réseau ou un prisme, ou un réseau, ou un composant incorporant les fonctions de réseau et de prisme.

5. Dispositif d'imagerie d'observation satellitaire selon l'une des revendications 1 à 4, **caractérisé en ce que** le premier et le second élément sont un seul et même composant.

6. Dispositif d'imagerie d'observation satellitaire selon l'une des revendications 1 à 5, **caractérisé en ce que** le composant micro-opto-électronique comporte une structure de micro-miroirs suspendus par rapport à un substrat dont la distance ou l'angle avec ledit substrat peut être commandée électriquement.

7. Dispositif d'imagerie d'observation satellitaire selon la revendication 6, **caractérisé en ce que** la structure de micro-miroirs comporte des éléments unitaires présentant des longueurs de quelques dizaines de microns et des largeurs de quelques microns.

8. Dispositif d'imagerie d'observation satellitaire selon l'une des revendications 6 ou 7, **caractérisé en ce que** les éléments unitaires sont séparés d'un pas de quelques microns.

9. Dispositif d'imagerie d'observation satellitaire selon l'une des revendications 1 à 8, **caractérisé en ce que** les moyens de commande sont programmables depuis le sol.

## Patentansprüche

1. Multispektrale Bildgebungsvorrichtung zur Satellitenbeobachtung, arbeitend in N Wellenlängenbändern, jeweils zentriert auf eine erste Wellenlänge (λ₁),..., eine N-te Wellenlänge (λ_{N}), Folgendes beinhaltend:
- eine Quelle, welche einen Lichtstrahl in einer Gruppe von N Wellenlängenbändern aussendet;
- eine Optik mit großem Sichtfeld;
- eine Gruppe von N Detektorlinien, welche an Bord eines Satelliten mitgeführt wird, zum Bewerkstelligen der Beobachtung, in aufeinanderfolgenden Schritten, einer beim Vorbeifliegen des Satelliten beobachteten Zone von zur Bewegungsrichtung D des Satelliten rechtwinkligen Linien (L₁, L₂, ..., L_{N}) und arbeitend in N Wellenlängenbändern, und welche es ermöglicht, Bilder der beobachteten Zone in unterschiedlichen Sendebändern (B₀, B₁, B₂, B₃) aufzunehmen,
- Mittel zur optischen Filterung,
**dadurch gekennzeichnet, dass** sie zudem Folgendes beinhaltet:
- ein erstes Dispersionselement (R₁,R), welches es ermöglicht, den Lichtstrahl in einen Strahl ∑F_{R} zu dispergieren, gebildet aus Einzelstrahlen F_{Ri}, in Richtung der Filtermittel;
- wobei die optischen Filtermittel Spektralfiltermittel sind und mindestens ein mikrooptoelektronisches System (MOEMS) beinhalten, auf welchem die Strahlen F_{RI} eintreffen,
wobei das mikrooptoelektronische System eine Struktur aus elementaren Mikrospiegeln (Mₒ₁) beinhaltet, welche in Bezug auf ein Substrat aufgehängt sind, und deren Abstand oder Winkel zum Substrat elektrisch steuerbar ist, um so, durch Annäherung bestimmter elementarer Mikrospiegel des Substrats, ein Reflexionsnetzwerk zu bilden, welches in der Lage ist, N Filterfunktionen für die N Spektralbänder auszuführen, abstimmbar in Bezug auf die Wellenlänge und nur bestimmte Wellenlängen beugend, während andere ausgeschaltet sind,
einen Strahl ∑F_{R}', welcher durch das mikrooptoelektronische System reflektiert wird, welcher teilweise gefilterte Spektralbänder in Bezug auf die Strahlen F_{Ri} aufweist;
- Mittel zum Steuern des mikrooptoelektronischen Systems, welche es ermöglichen, die räumliche Filterfunktion zeitabhängig auszuwählen
- ein zweites Dispersionselement (R₂, R), welches es ermöglicht, alle gefilterten Strahlen, welche einem gegebenen Sendeband (B₀, B₁, B₂, B₃) entsprechen, am Ausgang der Filtermittel in einer gegebenen Richtung zu rekombinieren, und diese zeitlich nacheinander in Richtung der zu beobachtenden Zone zu leiten.

2. Bildgebungsvorrichtung zur Satellitenbeobachtung nach Anspruch 1, **dadurch gekennzeichnet, dass** das erste Dispersionselement ein Netzwerk oder ein Prisma ist, oder ein Netzwerk, oder eine Komponente, welche die Netzwerk- und die Prismafunktionen beinhaltet.

3. Bildgebungsvorrichtung zur Satellitenbeobachtung nach einem der Ansprüche 1 oder 2, **dadurch gekennzeichnet, dass** die Steuermittel des mikrooptoelektronischen Systems Mittel zum Veranlassen einer Variation der Filterfunktion mit derselben Periode wie die Erfassungszeit eines Bildes beinhalten, welche der Bewegungszeit entspricht, welche gleichwertig mit einer gegenüber der beobachteten Zone laufenden Detektorzeile ist.

4. Bildgebungsvorrichtung zur Satellitenbeobachtung nach einem der Ansprüche 1 bis 3, **dadurch gekennzeichnet, dass** das weite Dispersionselement ein Netzwerk oder ein Prisma ist, oder ein Netzwerk, oder eine Komponente, welche die Netzwerk- und die Prismafunktionen beinhaltet.

5. Bildgebungsvorrichtung zur Satellitenbeobachtung nach einem der Ansprüche 1 bis 4, **dadurch gekennzeichnet, dass** das erste und das zweite Element ein und dieselbe Komponente sind.

6. Bildgebungsvorrichtung zur Satellitenbeobachtung nach einem der Ansprüche 1 bis 5, gekennzeichnet, dass die mikrooptoelektronische Komponente eine Struktur aus Mikrospiegeln beinhaltet, welche in Bezug auf ein Substrat aufgehängt sind, deren Abstand oder Winkel zum Substrat elektrisch gesteuert werden kann.

7. Bildgebungsvorrichtung zur Satellitenbeobachtung nach Anspruch 6, **dadurch gekennzeichnet, dass** die Struktur aus Mikrospiegeln Einzelelemente beinhaltet, welche Längen von einigen Zehn Mikrometern und Breiten von einigen Mikrometern aufweisen.

8. Bildgebungsvorrichtung zur Satellitenbeobachtung nach einem der Ansprüche 6 oder 7, **dadurch gekennzeichnet, dass** die Einzelelemente um einen Abstand von einigen Mikrometern getrennt sind.

9. Bildgebungsvorrichtung zur Satellitenbeobachtung nach einem der Ansprüche 1 bis 8, **dadurch gekennzeichnet, dass** die Steuerungsmittel vom Boden aus programmierbar sind.

## Claims

1. A multispectral imaging device for satellite observation operating in N wavelength bands, respectively centered on a first wavelength (λ₁),..., an n^{th} wavelength (λ_{N}) comprising:
- a source emitting a light beam in a set of the N wavelength bands;
- a wide-field optic;
- a set of N rows of detectors, on board a satellite to carry out successive observation of an area observed during the running of the satellite of rows (L₁, L₂, ...L_{N}) perpendicular to the direction of displacement D of said satellite and operating in the N wavelength bands, and making it possible to acquire images of said observed area in different emission bands (B₀, B₁, B₂, B₃);
- optical filtering means,
**characterized in that** it also comprises:
- a first dispersion element (R₁,R) making it possible to disperse the light beam into an ∑F_{R} beam composed of unitary F_{RI} beams towards the filtering means;
- the optical filtering means being spectral filtering means and comprising at least one micro-opto-electronic system (MOEMS) on which the F_{Ri} beams arrive, the micro-opto-electronic system comprising a structure of elementary micro-mirrors (Mₒᵢ) suspended relative to a substrate and the distance or angle of which with said substrate is electrically controllable, so as to constitute, by bringing together certain elementary micro-mirrors of said substrate, a reflection network capable of carrying out N filtering functions for the N spectral bands, wavelength-tunable and diffracting only certain wavelengths, while others are off,
an ∑F_{R'} beam reflected by said micro-opto-electronic system presenting spectral bands partially filtered against the F_{Ri} beams;
- control means for said micro-opto-electronic system making it possible to select over time, the spatial filtering function;
- a second dispersion element (R₂, R) making it possible to recombine all the filtered beams corresponding to a given emission band (B₀, B₁, B₂, B₃) at the output of the filtering means along a given direction, and send them successively in time towards the area to be observed.

2. The satellite observation imaging device as claimed in claim 1, **characterized in that** the first dispersion element is an array or a prism, or an array, or a component comprising the array and prism functions.

3. The satellite observation imaging device as claimed in one of claims 1 or 2, **characterized in that** the control means for the micro-opto-electronic system include means for varying the filtering function with the same period as the acquisition time for an image corresponding to the displacement time equivalent to a scrolling row of detectors facing the observed area.

4. The satellite observation imaging device as claimed in one of claims 1 to 3, **characterized in that** the second element is an array or a prism, or an array, or a component incorporating the array and prism functions.

5. The satellite observation imaging device as claimed in one of claims 1 to 4, **characterized in that** the first and second elements are one and the same component.

6. The satellite observation imaging device as claimed in one of claims 1 to 5, **characterized in that** the micro-opto-electronic component comprises a micro-mirror structure suspended relative to a substrate, the distance or the angle of which with said substrate can be controlled electrically.

7. The satellite observation imaging device as claimed in claim 6, **characterized in that** the micro-mirror structure comprises unitary elements having lengths of a few tens of microns and widths of a few microns.

8. The satellite observation imaging device as claimed in one of claims 6 or 7, **characterized in that** the unitary elements are separated by a pitch of a few microns.

9. The satellite observation imaging device as claimed in one of claims 1 to 8, **characterized in that** the control means can be programmed from the ground.
